# EUROPEAN PATENT SPECIFICATION

(11) **EP 3 493 963 B1**
(45) Date of publication and mention of the grant of the patent: **17.03.2021**
(21) Application number: 17748639.6
(22) Date of filing: 01.08.2017
(51) Int. Cl.: B29C 33/30, B29L 31/08

(54) **MOULD FOR A WIND TURBINE BLADE AND METHOD OF ASSEMBLING SAME**
FORM FÜR EINE WINDTURBINENSCHAUFEL UND VERFAHREN ZUR MONTAGE DAVON
MOULE POUR PALE D'ÉOLIENNE ET PROCÉDÉ POUR SON ASSEMBLAGE

(30) Priority: 02.08.2016 DK 201670570
(43) Date of publication of application: 12.06.2019
(73) Proprietor: Vestas Wind Systems A/S, 8200 Aarhus N (DK)
(72) Inventor: IRISSAPPANE, Vijayasankar, 6950 Ringkøbing (DK); DAVIS, Olav, Hamble Hampshire SO31 4HP (GB); PINO, Diego Andres, 8200 Aarhus N (DK)
(74) Representative: Vestas Patents Department
(86) International application number: PCT/DK2017/050254
(87) International publication number: WO 2018/024306

(56) References cited:
- WO-A2-2013/097859
- CN-A- 102 310 500
- CN-B- 103 240 878
- CN-Y- 201 432 382
- US-A1- 2012 061 024

## Description

### Technical Field

The present invention relates generally to wind turbines. More particularly it relates to a mould half having a modular mould shell for manufacturing wind turbine blades. It also relates to a method for adjusting or assembling the modular mould shell so as to have a smooth transition across the interface of adjacent mould shell sections.

### Background

The typical modern wind turbine includes a tower that supports a nacelle at an upper end thereof. A rotor having a central hub and one or more blades is coupled to the nacelle and converts the kinetic energy of the wind into mechanical energy, usually in the form of a rotating main shaft. The nacelle includes various components, such as a drive train and a generator, that convert the mechanical energy from the rotor into electrical energy. The radius of the rotor influences the performance of the wind turbine. For example, a wind turbine with an increased radius may deliver power even in lighter wind conditions. Additionally, a wind turbine with an increased radius may deliver more power due to the increased energy within the area defined by the radius. The radius of the rotor is substantially determined by the length of the wind turbine blades. Accordingly, the size of wind turbine blades has dramatically increased over the years in order to improve wind turbine efficiencies. By way of example, wind turbine blades as long as 90 m are currently in production and the size of the blades is expected to further increase in the future. As the blades are a major aspect and cost of wind turbine construction, much effort has been directed toward the efficient manufacturing of the blades.

According to one conventional process, a wind turbine blade is manufactured by disposing structural outer shell material, such as glass fiber material or carbon fiber material, into two mould halves and then injecting a binder, such as an epoxy resin, polyester resin, or other suitable material around the structural outer shell material while a vacuum system (e.g., vacuum bag) presses the structural outer shell material into each of the mould halves. In an alternate process, pre-impregnated composite material may be used which precludes injecting the material with a binder. In any event, after curing the binder about the structural outer shell material, the two halves of the wind turbine blade outer shell may be coupled to one another around a structural support member such as a web or a spar. In this regard, once the blade halves are formed in their respective moulds, the mould halves may be moved relative to each other to locate one mould half on top of the other mould half such that the edges of the two blade halves are generally aligned with each other. The mould halves may then be brought even closer together so that the edges of the blade halves may be, for example, adhesively bonded together along the leading and trailing edges of the blade, thereby completing blade construction.

While the manufacturing method described above is generally successful for its intended purpose, manufacturers have realized certain limitations to the conventional manufacturing method. More particularly, as the size of wind turbine blades has continued to increase, the size of the moulds used to make the blades has correspondingly increased. Due to the increased size of the moulds, the ability to transport the moulds to desired locations is severely limited. Accordingly, production facilities for full size moulds may have to be established at or near the production facilities for the blades, which also suffer from limitations in road transportation due to their increased size.

Various solutions to these issues have been proposed. By way of example, one solution is to mould the rotor blade in parts arranged across the length of the blade. In this approach, the mould is split into mould parts and in each mould part, a section of the blade is formed. The completed sections are then coupled end-to-end to form the full length blade. In another approach, a modular mould system which is comprised of a number of mould sections is used to form the blade. A junction of one mould section and an adjacent mould section is formed by a flexible end segment. The end segment is configured to substantially match the contour of the adjacent mould section such that there is no discontinuity in the blade surface across the junction. Such a solution is proposed for example in WO2013/097859.

While such techniques have been generally successful for their intended purpose, blade manufactures continue to strive to improve upon current manufacturing devices and methodologies. More particularly, blade manufacturers continue to strive to improve the transition between sections of a modular mould system for wind turbine blades.

### Summary

A method of assembling a mould for forming a wind turbine blade includes providing a mould half having a mould shell defining a mould surface, the mould shell having at least a first mould shell section and a second mould shell section; positioning the at least first mould shell section and the at least second mould shell section adjacent one another so that connecting ends of each of the first and second mould shell sections confront each other along an interface; and wherein the first mould shell section includes a first flange adjacent the connecting end and extending away from the mould surface of the first mould shell section, the second mould shell section includes a second flange adjacent the connecting end and extending away from the mould surface of the second mould shell section. The method including adjusting the relative positions of the first and second mould shell sections to that the mould surface across the interface is substantially flush; and with the mould surface across the interface substantially flush, securing the relative positions of the first and second mould shell sections in order to maintain a smooth transition across the interface.

In accordance with an aspect of the invention, at least one adjustment device may be mounted to the first and second mould shell sections adjacent the interface, wherein the at least one adjustment device is configured to adjust the relative positions of the first and second mould shell sections. Mounting the at least one adjustment device to the first and second mould shell sections includes mounting a first bracket to one of the first and second mould shell sections; mounting a second bracket to the other of the first and second mould shell sections; and coupling an adjustment connector to each of the first and second brackets, wherein the adjustment connector includes at least one adjustment actuator. Adjusting the relative positions of the first and second mould shell sections may thereby include operating the adjustment actuator to provide movement of the first and second mould shell sections relative to each other. The adjustment actuator may exhibit an adjustment path defining a direction of an adjustment movement between the first and second mould shell sections. Preferably, the adjustment direction may extend in a thickness direction of the mould, which is to say, a direction relative to the mould surface corresponding to a thickness direction of a blade or blade part moulded therein. In further aspects of the invention, the adjustment connector may comprise a connecting rod. Preferably, the adjustment actuator may comprise a rotatable member, preferably associated with the connecting rod. In one embodiment, coupling a connecting rod to the first and second brackets includes inserting a shaft of the connection rod through an opening in the first bracket; disposing the first bracket between a first pair of rotatable members on the shaft; inserting the shaft through an opening in the second bracket; and disposing the second bracket between a second pair of rotatable members on the shaft. The shaft may be a threaded shaft.

The step of mounting the first and second brackets further includes providing a pair of L-shaped brackets, each having a first leg and a second leg extending therefrom; coupling the first leg of one bracket to one of the first and second mould shell sections; coupling the first leg of the other bracket to the other of the first and second mould shell sections; and orienting the second leg of each bracket in the same direction such that the second legs overlap with each other in a longitudinal direction of the mould half. The adjustment connector or connecting rod extends between the second legs of the pair of brackets. In one embodiment, the first leg of the one bracket is coupled to one of the first and second flanges and the first leg of the other bracket is coupled to the other of the first and second flanges.

The first bracket, second bracket, and adjustment connector may be arranged such that an adjustment path of the adjustment connector is oriented in a substantially thickness direction of the mould half, and relative movement between the first and second mould shell sections is in the substantially thickness direction of the mould half, which thickness direction may in some cases may correspond to a vertical direction. Preferably, in the case of an adjustment connector comprising a connector rod, the connector rod may extend in a thickness direction of the mould. The first bracket, second bracket, and connecting rod may also be arranged such that the connecting rod is positioned only on one side of the interface, when considered in the longitudinal direction of a blade formed in the relevant mould-half. Hence, according to an aspect of the invention, the method may further comprise arranging the first bracket, second bracket, and adjustable connector such that the adjustable connector is positioned only on one side of the interface.

A method of manufacturing a wind turbine blade includes providing a first mould half assembled according to that described above, and placing fibre and a resin in the mould shell of the first mould half to form a first shell half of the wind turbine blade. The method may further include providing a second mould half and placing fibre and a resin in a mould shell of the second mould half to form a second shell half of the wind turbine blade. In one embodiment, the first and second mould halves are movably coupled together and the method further includes moving the first and second mould halves relative to each other such that one mould half is on the other mould half and the first and second shell halves of the wind turbine blade confront each other, and coupling the first and second shell halves together to form the wind turbine blade.

In accordance with aspects of the method, the securing step may include providing one or a plurality of holes in one of the first and second mould shell sections adjacent the interface; using the one or plurality of holes in the one of the first and second mould shell sections as a guide for forming a corresponding one or plurality of holes in the other of the first and second mould shell sections, such that the one or plurality of holes and the corresponding one or plurality of holes are in substantial alignment with each other; and engaging a fastener with each of the substantially aligned holes and corresponding holes in the first and second mould shell sections. In one embodiment, forming the corresponding holes may include inserting a drill element into a hole of the one of the first and second mould shell sections; drilling a corresponding hole in the other of the first and second mould shell sections using the hole as a guide; and repeating these steps for each or any of the remaining holes in the first and second mould shell sections. A plurality of pre-formed holes may be provided in one of the first and second flanges and the corresponding plurality of holes may be subsequently formed in the other of the first and second flanges, after the said adjustment step. The holes and corresponding holes may be oriented so as to be substantially aligned in a longitudinal direction of the mould half. A method according to the invention is defined in appended claim 1. Further features thereof are defined in subclaims 2-11.

The invention also encompasses a mould half for forming a wind turbine blade includes a mould shell defining a mould surface, the mould shell including at least a first mould shell section and a second mould shell section, each of the first and second mould shell sections having a connecting end which confront each other along an interface. The first mould shell section includes a first flange adjacent the connecting end and extending away from the mould surface of the first mould shell section, and the second mould shell section includes a second flange adjacent the connecting end and extending away from the mould surface of the second mould shell section. Preferably, the first bracket of the adjustment device is coupled to one of the first and second flanges and the second bracket is coupled to the other of the first and second flanges. At least one adjustment device is positioned adjacent the interface and coupled to both the first and second mould shell sections, wherein the at least one adjustment device is configured move the first and second mould shell sections relative to each other. The at least one adjustment device includes a first bracket coupled to one of the first and second mould shell sections; a second bracket coupled to the other of the first and second mould shell sections; and an adjustment connector coupled to each of the first and second brackets and including at least one adjustment actuator. Operation of the at least one adjustment actuator provides relative movement between the first and second mould shell sections. The first bracket, second bracket, and adjustment connector are preferably arranged such that the adjustment connector is positioned only on one side of the interface. In this regard, at least one of the brackets extends across the interface to define an overlap region between the first and second brackets, wherein the adjustment connector is coupled to the first and second brackets in the overlap region. Alternatively or additionally, the first bracket, second bracket, and adjustment connector may be arranged such that an adjustment path of the adjustment connector is oriented in a substantially vertical direction. The first and second brackets comprise L-shaped brackets. Preferably, the adjustment connector includes a connecting rod. Preferably, an adjustment connector such as a connecting rod may include a threaded shaft. Preferably, the at least one adjustment actuator may comprise a rotatable member. Preferably, a rotatable member may include a first pair of nuts and a second pair of nuts. In embodiments, the adjustment connector may comprise a connecting rod. In embodiments the adjustment actuator may comprise a rotatable member, preferably associated with a connecting rod.

Preferably, the first bracket is coupled to one of the first and second flanges and the second bracket is coupled to the other of the first and second flanges. In one embodiment, the first and second brackets include L-shaped brackets, the adjustment connector includes a connecting rod, preferably includes a threaded shaft, and the at least one rotatable member includes a first pair of nuts and a second pair of nuts. A mould half according to the invention is defined in appended claim 12. Further features thereof are defined in subclaims 13-14.

### Brief Description of the Drawings

Various additional features and advantages of the invention will become more apparent to those of ordinary skill in the art upon review of the following detailed description of one or more illustrative embodiments taken in conjunction with the accompanying drawings. The accompanying drawings, which are incorporated in and constitute a part of this specification, illustrate one or more embodiments of the invention and, together with the general description given above and the detailed description given below, serve to explain the one or more embodiments of the invention.
Fig. 1 is a diagrammatic perspective view of a wind turbine having a blade formed by a moulding apparatus in accordance with one embodiment of the invention;
Fig. 2 is a perspective view of a wind turbine blade shown in Fig. 1;
Fig. 2A is a cross-sectional view of the wind turbine blade shown in Fig. 2;
Fig. 3 is a partial perspective view of a moulding apparatus for forming wind turbine blades;
Fig. 4 is a partial perspective view of an interface between adjacent mould shell sections of a mould half in accordance with an embodiment of the invention;
Fig. 5A is a cross-sectional view of the mould shell sections of Fig. 4 illustrating an adjustment device and with the adjacent mould shell sections out of alignment;
Fig. 5B is another cross-sectional view of the mould shell sections of Fig. 4 with the mould shell sections in alignment; and
Fig. 5C is another cross-sectional view of the mould shell section of Fig. 4 with the mould shell sections secured together.

### Detailed Description

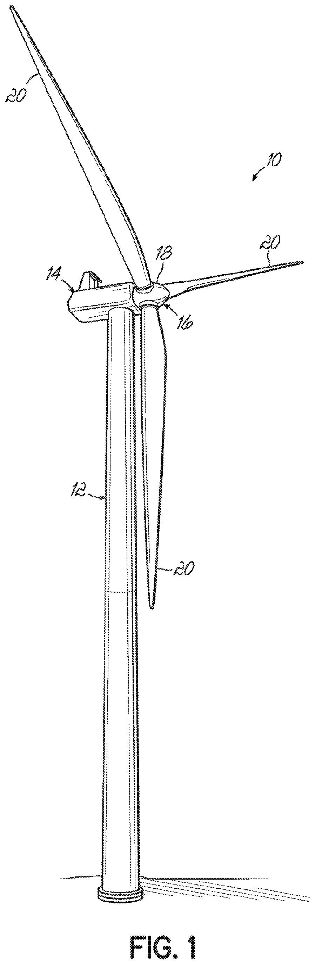

Referring to the figures, and to Fig. 1 in particular, an exemplary horizontal-axis wind turbine 10 generally includes a tower 12, a nacelle 14 disposed at the apex of the tower 12, and a rotor 16 operatively coupled to a generator housed inside the nacelle 14. In addition to the generator, the nacelle 14 houses miscellaneous components required for converting wind energy into electrical energy and various components needed to operate, control, and optimize the performance of the wind turbine 10. The tower 12 supports the load presented by the nacelle 14, the rotor 16, and other components of the wind turbine 10 that are housed inside the nacelle 14. The tower 12 further operates to elevate the nacelle 14 and rotor 16 to a height above ground level or sea level, as may be the case, at which faster moving air currents of lower turbulence are typically found.

The rotor 16 of the wind turbine 10 serves as the prime mover for the electromechanical system. Wind exceeding a minimum level will activate the rotor 16 and cause rotation in a substantially perpendicular direction to the wind direction. The rotor 16 of wind turbine 10 includes a central hub 18 and a plurality of blades 20 that project outwardly from the central hub 18 at locations circumferentially distributed thereabout. While the exemplary rotor 16 shown herein includes three blades 20, various alternative quantities of blades may be provided. The blades 20 are configured to interact with the passing air flow to produce lift that causes the rotor 16 to spin generally within a plane defined by the blades 20.

The wind turbine 10 may be included among a collection of similar wind turbines belonging to a wind farm or wind park that serves as a power generating plant connected by transmission lines with a power grid, such as a three-phase alternating current (AC) power grid. The power grid generally consists of a network of power stations, transmission circuits, and substations coupled by a network of transmission lines that transmit the power to loads in the form of end users and other customers of electrical utilities. Under normal circumstances, the electrical power is supplied from the generator 18 to the power grid as known to a person having ordinary skill in the art.

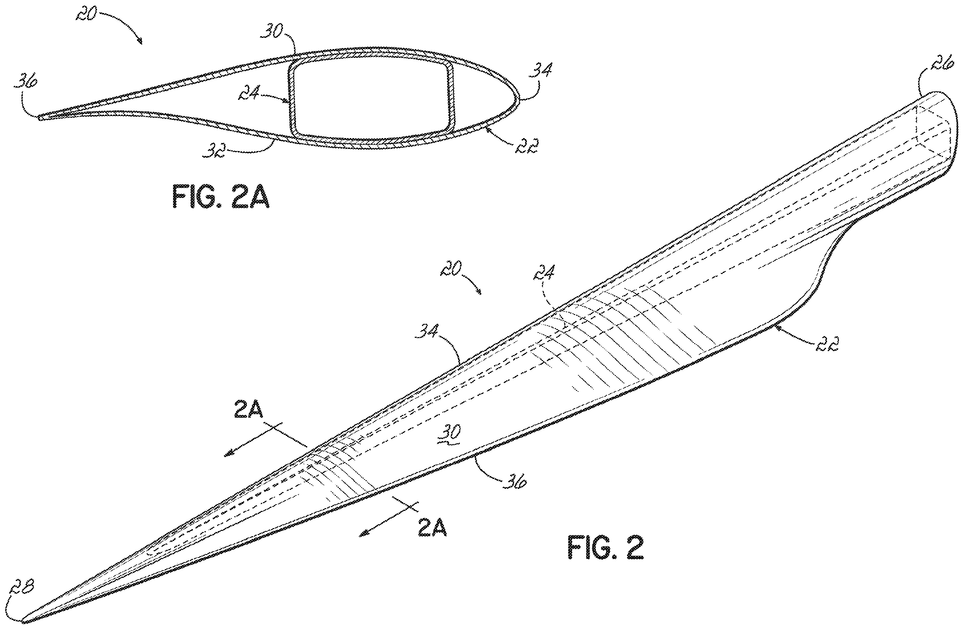

With reference to Figs. 2 and 2A, a wind turbine blade 20 is an elongate structure having, in an exemplary embodiment, an outer shell 22 disposed about an inner support element or spar 24. The outer shell 22 may be optimally shaped to give the blade 20 the desired aerodynamic properties to generate lift, while the spar 24 provides the structural aspects (e.g., strength, stiffness, etc.) to blade 20. The elongate blade 20 includes a root end 26 which is coupled to the central hub 18 when mounted to rotor 16, and a tip end 28 longitudinally opposite to root end 26. As discussed above, the outer shell 22 includes a first, upper shell half 30 on the suction side of the blade 20, and a second, lower shell half 32 on the pressure side of the blade 20, the upper and lower shell halves 30, 32 being coupled together along a leading edge 34 and a trailing edge 36 located opposite one another across a width of the blade 20.

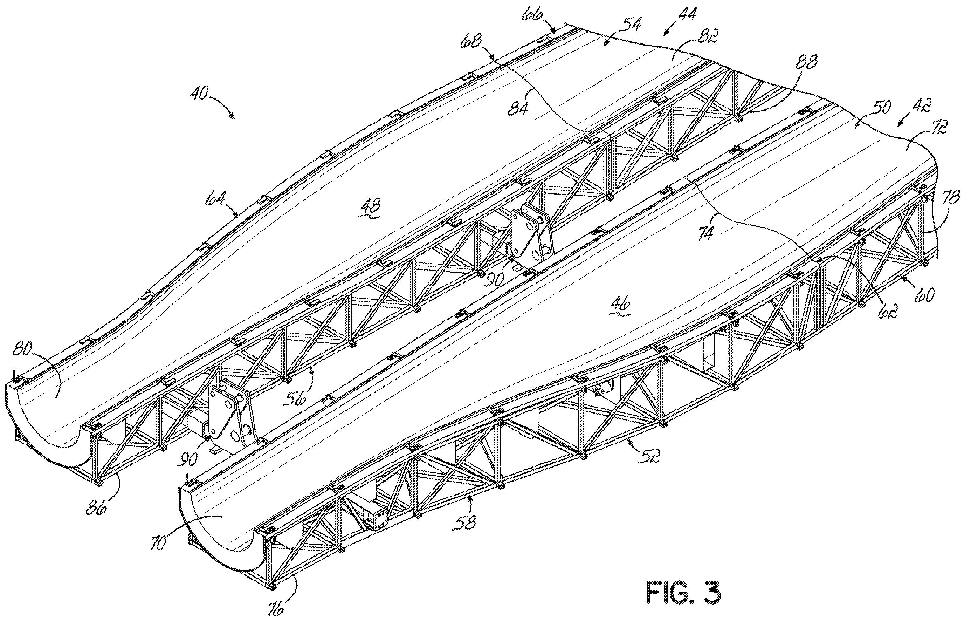

In accordance with an exemplary embodiment of the invention and as illustrated in Fig. 3, a moulding apparatus 40 for forming rotor blades, such as blades 20 described above, includes a first mould half 42 and a second mould half 44 positioned adjacent to each other. The first mould half 42 is configured to be used to at least partially form the first shell half 30 of the blade 20 and the second mould half 44 is configured to be used to at least partially form the second shell half 32 of the blade 20. To this end, the first mould half 42 includes a first contoured mould surface 46 generally corresponding to a negative of the contoured surface of the first shell half 30. Similarly, the second mould half 44 includes a second contoured mould surface 48 generally corresponding to a negative of the contoured surface of the second shell half 32.

The first mould half 42 comprises a first mould shell half 50 forming the first contoured mould surface 46 and a first support structure 52 to support the first mould shell half 50. In a similar manner, the second mould half 44 includes a second mould shell half 54 forming the second contoured mould surface 48 and a second support structure 56 to support the second mould shell half 54. In an exemplary embodiment, the first and second mould shell halves 50, 54 are formed from a fibre-reinforced composite, such as a fibre-reinforced composite formed from resin, carbon fibre and/or fibreglass. Additionally, in an exemplary embodiment, the first and second support structures 52, 54 may be formed by metal frames such as steel frames. It should be recognized, however, that in various alternative embodiments other materials may be used to form the mould shell halves 50, 54 and/or the support structures 52, 54.

In accordance with an aspect of the invention, and as illustrated in Fig. 3, the moulding apparatus 40 may have a modular or split design wherein the first and second mould halves 42, 44 include two or more mould half sections longitudinally arranged which, when coupled together at a mating junction, form the complete mould halves 42, 44. As noted above, the modular design of the moulding apparatus 40 provides certain benefits in transporting the moulds and ancillary devices for manufacturing wind turbine blades.

By way of example, in an exemplary embodiment the first mould half 42 includes a root mould half section 58 and a tip mould half section 60 which are configured to mate at a first junction 62. In a similar manner, the second mould half 44 includes a root mould half section 64 and a tip mould half section 66 which mate at a second junction 68. As a result of the modularity, the first mould shell half 50 includes a root mould shell section 70 and a tip mould shell section 72 which mate at a first mould shell interface 74. The first support structure 52 may also include a root support structure 76 for supporting the root mould shell section 70 and a tip support structure 78 for supporting the tip mould shell section 72. In a similar manner, the second mould shell half 54 includes a root mould shell section 80 and a tip mould shell section 82 which mate at a second mould shell interface 84. The second support structure 56 may also include a root support structure 86 for supporting the root mould shell section 80 and a tip support structure 88 for supporting the tip mould shell section 82. In an exemplary embodiment, the first and second mould shell interfaces 74, 84 extend transversely in relation to the longitudinal direction of the mould assembly 40, such as, for example, in a substantially perpendicular (relative to the longitudinal direction) or chord-wise direction of a blade 20 formed in the mould assembly 40. Other directions, however, may be possible.

While the modularity of the first and second mould halves 42, 44 has been described above as including two sections, it should be recognized that the mould halves 42, 44 may be formed from more than two sections, such as three or four sections. Moreover, while both mould halves 42, 44 have been described as each having the same number of sections, it should be realized that the mould halves 42, 44 may have a different number of sections that form the respective mould halves. Furthermore, in the embodiment described above, each mould shell section (e.g., mould shell sections 70, 72) was associated with a respective support structure section (e.g., support structure sections 76, 78). However, in alternative embodiments, there may be multiple mould shell sections on a single support structure section. Thus, the invention is not limited to the arrangement illustrated in the figures, but various alternative arrangements will be appreciated by those of ordinary skill in the art.

In the illustrated embodiment, one of the first and second mould halves 42, 44 is movable relative to the other such that first and second mould halves 42, 44 may be used to couple the first and second blade shell halves 30, 32 to each other and to form the outer shell 22 of the blade 20. By way of example, the moulding apparatus 40 may have a clamshell configuration having a fixed mould half and a movable mould half movable relative to the fixed mould half so as to come to rest on top of the fixed mould half. For example, the first mould half 42 may be configured to be fixed to ground and the second mould half 44 may be configured to be movable relative to the first mould half 52 and relative to ground. The opposite arrangement is also possible.

With such a clamshell configuration, the second mould half 44 may be movable relative to the first mould half 42 between an opened position, as illustrated in Fig. 3, and a closed position (not shown) with the second mould half 44 resting on the first mould half 42 such that the first and second contoured mould surfaces 46, 48 form a cavity between the first and second mould halves 42, 44. For example, the moulding apparatus 40 may include a turner assembly 90 to effectuate movement of the second mould half 44 relative to the first mould half 42. The turner assembly 90 may be positioned between the first and second mould halves 42, 44 when in the opened position and includes a hinge or pivot device such that the second mould half 44 is configured to rotate about a pivot axis when moved toward the closed position. In the opened position, the contoured surfaces 46, 48 of the first and second mould halves 42, 44, respectively, are exposed such that the blade shell halves 30, 32 may be formed therein. This may be achieved, for example, by placing fiber and a resin in the first and second mould shell halves 50, 52. In the closed position with the second mould half 44 positioned on top of the first mould half 42, respective pairs of confronting edges of the first and second blade shell halves 30, 32 may be generally aligned and in contact or near contact with each other so as to be coupled together to form the leading and trailing edges 34, 36 of the blade 20.

While the modular design of the moulding apparatus 40 provides certain benefits, care must be taken to ensure that those benefits are not offset by the introduction of other undesirable effects in the manufacturing process. For example, as can be appreciated by those of ordinary skill in the art, the performance of wind turbine blades is sensitive to defects, disruptions, discontinuities, etc., in the surface of the blades over which air flows. Accordingly, when implementing a modular mould design, it is important that the transition between the mould sections, and in particular the mould surfaces, be smooth and substantially without disruption so that no defects result in the surface of the blade formed in the mould.

To facilitate the prevention or minimization of defects at the interface between mould shell sections, the moulding apparatus includes one or more adjustment devices that provide relative movement between adjacent mould shell sections. By manipulating the adjustment devices, the moulding surfaces of adjacent moulding sections may be adjusted so as to be substantially flush such that defects in the surface of the wind turbine blade at the interface between the adjacent sections may be avoided.

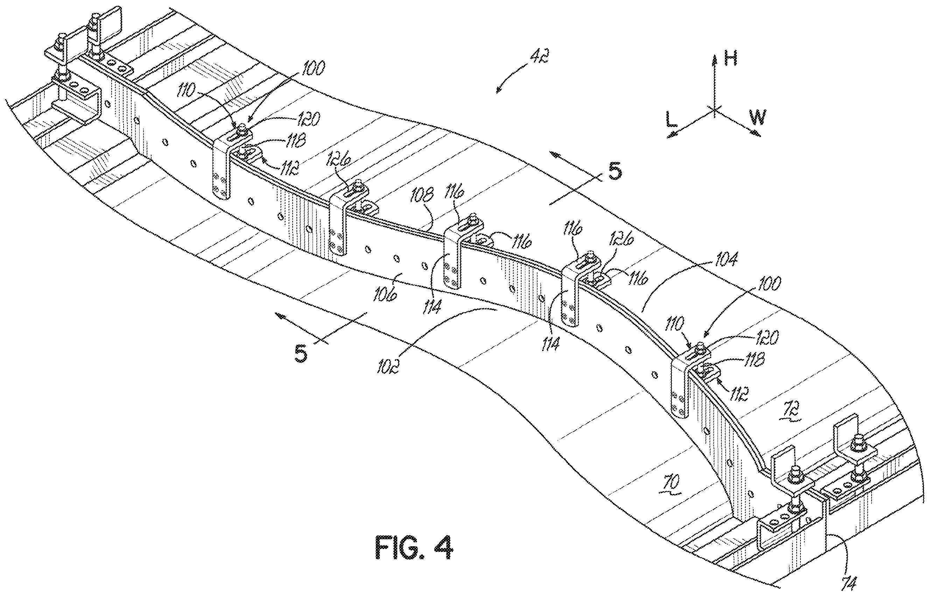

In this regard and as best illustrated in Fig. 4, the moulding apparatus 40 includes one or more adjustment devices 100 adjacent the interface 74 between the root mould shell section 70 and the tip mould shell section 72 of the first mould half 42. Although not shown, adjustment devices 100 may also be provided adjacent the interface 84 between the root mould shell section 80 and the tip mould shell section 82 of the second mould half 44. The description and operation of the adjustment devices 100 will be described with reference to interface 74 in the first mould half 42. It should be realized, however, that the description may also apply to the adjustment devices for the second mould half 44.

The interface 74 is formed by the juxtaposition of a connecting end 102 of the root mould shell section 70 and a connecting end 104 of the tip mould shell section 72. The connecting end 102 of the root mould shell section 70 includes a depending flange 106 which extends away from the moulding surface 46 of the root mould shell section 70. By way of example, the depending flange 106 may extend away from the moulding surface 46 in a substantially perpendicular manner relative to the moulding surface 46, e.g. corresponding to a thickness direction of a blade when present in the mould. In a similar manner, the connecting end 104 of the tip mould shell section 72 includes a depending flange 108 which extends away from the moulding surface 46 of the tip mould shell section 72. By way of example, the depending flange 108 may extend away from the moulding surface 46 in a substantially perpendicular manner, e.g. corresponding to a thickness direction of a blade when present in the mould. The flanges 106, 108 are arranged such that when the connecting ends 102, 104 are brought together, the flanges 106, 108 confront each other and are in contact or near contact with each other.

Broadly speaking, the adjustment device includes a first structural member coupled to one of the mould shell sections, a second structural member coupled to the other mould shell section, and a connecting rod extending between the two structural members. At least a portion of the connecting rod is movable or actuatable such that the position of the two structural members relative to each other may be varied. In an exemplary embodiment, the adjustment device 100 includes a first bracket 110 having a connecting end coupled to the flange 106 of the root mould shell section 70 and a free end, and a second bracket 112 having a connecting end coupled to the flange 108 of the tip mould shell section 72. As illustrated in Fig. 4, in an exemplary embodiment, the first and second brackets 110, 112 may include L-shaped brackets having a first leg 114 substantially parallel to the flanges 106, 108 to which they are coupled, and a second leg 116 extending therefrom in, for example, a substantially perpendicular manner and including the free end. The first legs 114 of the brackets 110, 112 may be coupled to their respective flanges 106, 108 by various fasteners such as screws, rivets, bolts, etc. Other means of connecting the brackets 110, 112 to the flanges 106, 108 may also be used, such as by means of adhesive e.g. epoxy-type adhesive. In a preferred mode, both a fastener and a layer of adhesive may be used between a first leg 114 of a bracket 110 and a flange 106, 108 of a mould shell to secure these elements together.

The first and second brackets 110, 112 are coupled to their respective flanges 106, 108 such that the second legs 116 thereof extend in substantially the same direction (e.g., toward the root end or the tip end of the moulding apparatus 40). In this way, at least a portion of the brackets 110, 112, such as the second legs 116 thereof, overlap with each other in, for example, a longitudinal direction L of the mould half 42, as illustrated in Fig. 4. In this regard, the second leg 116 of the first bracket 110 extends across the interface 74 to provide an overlapping region of the first and second brackets 110, 112. Additionally, the brackets 110, 112 are arranged such that the overlapping region (e.g., second legs 116) is substantially aligned in a width direction W of the mould half 42 (corresponding to a chordwise direction of a blade made in said mould), and are offset from one another in a height direction H of the mould half 42 (corresponding to a thickness direction of a blade made in said mould). The adjustment device 100 further includes an adjustment connector 118 extending between the first and second brackets 110, 112, and more particularly between the second legs 116 of the brackets (e.g., the overlapping region). The adjustment connector 118 includes one or more adjustment actuators 120 such that when the one or more adjustment actuators 120 are rotated, the relative position of the mould shell sections 70, 72 is varied. The adjustment connector 118 is shown here by way of example as a connecting rod. The connecting rod includes one or more adjustment actuators 120 in the form a one or more rotatable members, such that when the one or more rotatable members are rotated, the relative position of the mould shell sections 70, 72 is varied. In the present example, an adjustment path of the adjustment connector extends in a thickness direction H of the mould assembly.

In an exemplary embodiment, the connecting rod of the adjustment connector 118 may be or may include a threaded bolt or shaft 122 and the adjustment actuators 120 may include nuts 124 such as, for example, a set of four nuts. The second legs 116 of each of the brackets 110, 112 include an oblong slot 126 extending generally in the length direction of the second legs 116 and configured to receive the threaded shaft 122 therethrough. Forming the slots 126 so as to have an elongate or oblong shape may facilitate assembly of the adjustment device 100. As illustrated, in an exemplary embodiment an adjustment actuator 120, shown in the form of a first pair of nuts 124, may be associated with the first bracket 110 and a second adjustment actuator 120, shown in the form of a second pair of nuts 124, may be associated with the second bracket 112. More particularly, the first adjustment actuator 120 may be disposed on opposed sides (e.g., an upper and lower side) of the second leg 116 of the first bracket 110 and the second adjustment actuator 120 may be disposed on opposed sides of the second leg 116 of the second bracket 112. By manipulating the adjustment actuator 120, the relative position of the root mould shell section 70 and the tip mould shell section 72 of the first mould half 42 may be selectively varied. In particular the relative position of the said mould shell sections 70, 72 may be varied in the direction H of an adjustment path of the adjustment connector 118.

In an exemplary embodiment, the first bracket 110, second bracket 112, and the adjustment connector 118 may be arranged such that the adjustment connector 118 extends in a height direction of the mould half 42, corresponding in particular to a thickness direction of a blade in the mould. Accordingly, the relative position of the mould shell sections 70, 72 may be varied generally in a height direction of the mould half 42 (see Fig. 4), i.e. in a thickness direction of the mould assembly. In one embodiment, the height direction may correspond to a substantially vertical direction of the mould half 42. Other directions, however, may also be selected, such as, for example, in a range of about ± 10° about the thickness direction H. Such an arrangement minimizes bending stresses in the adjustment connector 118 and allows the bending stresses to be accommodated by the brackets 110, 112 instead of by the adjustment connector 118. Furthermore, in an exemplary embodiment, the first bracket 110, second bracket 112, and the adjustment connector 118 may be arranged such that the adjustment connector 118, such as a connecting rod, is positioned only on one side of the interface 74, and thus does not extend across the interface 74. The adjustment connector 118 may be configured as a rod or any type of shank or shaft or grooved shaft or toothed track or other suitable element, e.g. an element providing easy incremental adjustability along a length thereof. In particular, it is desirable for an adjustment connector 118 to enable a discrete adjustment of the adjustment assembly.

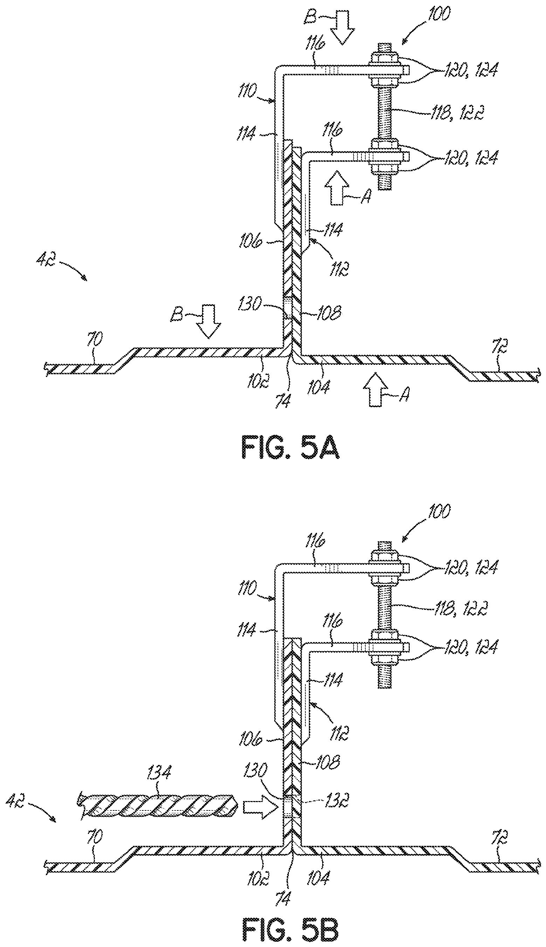

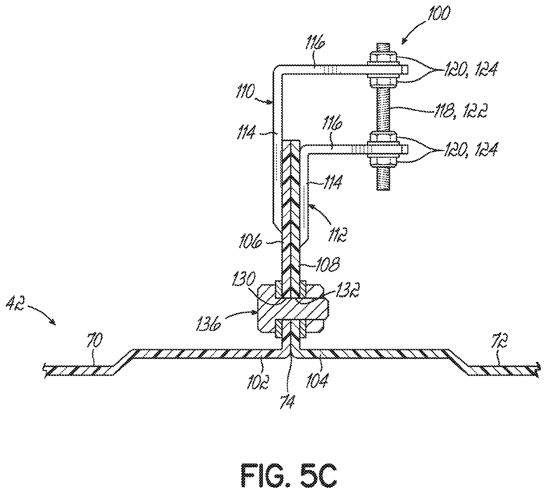

Figs. 5A-5C schematically illustrate the assembly of mould half 42, including the use of adjustment device 100 to align the mould shell sections 70, 72. The relative thicknesses of the mould shell and the brackets 110, 112 may not be shown to scale. In particular, the mould shell may be appreciably thicker than illustrated, relative to the bracket thickness. For purposes of discussion, in Fig. 5A the mould shell sections 70, 72 are not in alignment with each other and a discontinuity exists at the interface 74. Accordingly, to provide a smooth transition, an adjustment must be made between the sections 70, 72. The adjustment can be accomplished in several ways. For example, in one embodiment, the root mould shell section 70 may be held stationary and the tip mould shell section 72 may be moved, such as in the direction of arrow A. In this regard, the upper and lower nuts 124 shown by way of example and associated with the second bracket 112 may be loosened such that the tip mould shell section 72 may be moved so that the sections 70, 72 are substantially flush and have a smooth transition at the interface 74. When the mould shell section 72 is moved to such a location, the nuts 124 may be tightened so as to securely clamp the second leg 116 of the second bracket 112 therebetween and fix the relative position of the mould shell sections.

In an alternative embodiment, the tip mould shell section 72 may be held stationary and the root mould shell section 70 may be moved, such as in the direction of arrow B. In this regard, the upper and lower nuts 124 associated with the first bracket 110 may be loosened such that the root mould shell section 70 may be moved so that the sections 70, 72 are substantially flush and have a smooth transition at the interface 74. When the mould shell section 70 is moved to such a location, the nuts 124 may be tightened so as to securely clamp the second leg 116 of the first bracket 110 therebetween and fix the relative position of the mould shell sections.

In yet another alternative embodiment, both mould shell sections 70, 72 may be moved toward one another so as to provide a smooth transition at the interface 74. In this regard, the upper and lower nuts 124 associated with each of the first and second brackets 110, 112 may be loosened, the sections 70, 72 appropriately positioned to be substantial flush to provide a smooth transition, and the nuts 124 tightened to clamp the second legs 116 of the brackets 110, 112 therebetween. Those of ordinary skill in the art may recognize other alternative methodologies for utilizing the adjustment device 100 to substantially align the mould shell sections 70, 72 so as to provide a smooth transition at the interface 74. As used herein, the mould sections 70, 72 are substantially flush when a step in the surfaces of the sections 70, 72 at the interface 74 is less than about 3 mm or less than about 2mm, preferably less than 1mm, still preferably less than 0,5mm. As already indicated herein, the adjustment connector 118 and adjustment actuator 120 may be provided in any appropriate form, with the illustrated threaded shaft and the nuts 124 being but one example.

When the mould shell sections 70, 72 are properly aligned, the relative position of the shell sections 70, 72 may be additionally secured to one another (i.e., by more than just the adjustment devices 100). In a conventional approach, each of the flanges 106, 108 may include a plurality of pre-formed holes configured to receive a fastener for securing the mould shell sections together. However, if the alignment of the shell sections is not precisely determined, and adjustment of one or both of the mould shell sections is required to produce a smooth transition at the interface, the holes in the flanges 106, 108 may not be in alignment, and thus may not be able to receive a fastener. Thus, in accordance with an aspect of the present invention, holes in at least one of the flanges may not be formed until the mould shell sections have been properly aligned and a smooth transition at the interface is achieved.

In an exemplary embodiment, for example, a plurality of holes 130 may be formed through flange 106 of the root mould shell section 70, but no holes formed through flange 108 of the tip mould shell section 72. By way of example, the holes 130 in flange 108 may be pre-formed, such as during manufacturing of the moulding shell section 70. As illustrated in Fig. 5B, after the mould shell sections 70, 72 have been substantially aligned to produce a smooth transition at the interface 74 using the adjustment devices 100, corresponding holes 132 may be formed through flange 108. In one aspect of the invention, the holes 130 in flange 106 may be used as guide or pilot holes (e.g., a template) for forming the holes 132 in the flange 108. Such a process ensures that the holes 130, 132 are in substantial alignment with each other so as to receive a fastener. In this regard, a drill element 134, such as a drill bit, may be inserted into a hole 130 and sufficiently driven in order to form the corresponding hole 132. This process may be repeated for each of the plurality of holes 130 in the flange 106.

With the holes 130, 132 in respective flanges 108, 106 in substantial alignment, a fastener 136 may be inserted through the holes 130, 132 to secure the position of the mould shell sections 70, 72 relative to each other. In one embodiment, the fastener 136 may be a nut and bolt. Other fasteners, such as screws, rivets, etc., may alternatively be used. While the figures illustrated holes 130 in flange 106 and the subsequent formation of holes 132 in flange 108 using holes 130 as pilot holes, it should be recognized that in an alternative embodiment the holes may be formed in flange 108 and those holes used as pilot holes for the formation of holes in flange 106. In still a further embodiment, some pilot holes may be formed in flange 106 and some pilot holes formed in flange 108. In any event, in an exemplary embodiment, the holes 130, 132 may be substantially aligned in a longitudinal direction of the mould half 42.

The number of adjustment devices 100 along the length of the flanges 106, 108 may be varied. Thus, while five adjustment devices 100 are illustrated in Fig. 4, for example, more or less devices may be used and remain within the scope of the invention. Additionally, the number of holes 130, 132 and fasteners 136 for securing the position of the mould shell sections 70, 72 relative to each other may also be varied. By way of example and without limitation, anywhere from 10-40 fasteners 136 may be used although in some cases higher or lower numbers may be used. This number, however, depends on the size of the moulds and may be varied accordingly to achieve a secure connection between the mould shell sections 70, 72.

While the description provided above was directed to the adjustable coupling of the mould shell sections 70, 72 of the first mould half 42, it should be recognized that a similar arrangement and process may be used to adjustably couple mould shell sections 80, 82 of the second mould half 44. Additionally, it should be recognized that while the mould halves 42, 44 were described as having only two sections, each mould half 42, 44 may have more than two sections. In such an embodiment, the sections may be adjustably coupled together in a manner similar to that described above. Furthermore, a wind turbine blade manufactured using the mould shell segments described herein may be a portion a wind turbine blade, in particular, a lengthwise portion thereof such as a longitudinal segment of a blade.

While the present invention has been illustrated by the description of various embodiments thereof, and while the embodiments have been described in considerable detail, it is not intended to restrict or in any way limit the scope of the appended claims to such detail. The various features discussed herein may be used alone or in any combination. Additional advantages and modifications will readily appear to those skilled in the art. The invention in its broader aspects is therefore not limited to the specific details and illustrative examples shown and described.

## Claims

1. A method of assembling a mould for forming a wind turbine blade, comprising:
providing a mould half (42, 44) having a mould shell (50, 54) defining a mould surface (46, 48), the mould shell (50, 54) having at least a first mould shell section (70, 80) and a second mould shell section (72, 82);
positioning the at least first mould shell section (70, 80) and the at least second mould shell section (72, 82) adjacent one another so that connecting ends (102,104) of each of the first and second mould shell sections (70, 72; 80, 82) confront each other along an interface (74, 84);
wherein the first mould shell section (70, 80) includes a first flange (106) adjacent the connecting end (102) and extending away from the mould surface (46) of the first mould shell section (70, 80), and wherein the second mould shell section (72, 82) includes a second flange (108) adjacent the connecting end (104) and extending away from the mould surface (48) of the second mould shell section (72, 82);
adjusting the relative positions of the first and second mould shell sections (70, 72; 80, 82) so that the mould surface across the interface (74, 84) is substantially flush; and
with the mould surface across the interface (74, 84) substantially flush, securing the relative positions of the first and second mould shell sections (70, 72; 80, 82) in order to maintain a smooth transition across the interface (74, 84), wherein the adjusting step further comprises:
mounting at least one adjustment device (100) to the first and second mould shell sections (70, 72; 80, 82) adjacent the interface (74, 84), the at least one adjustment device (100) configured to adjust the relative positions of the first and second mould shell sections (70, 72; 80, 82), wherein mounting the at least one adjustment device (100) to the first and second mould shell sections (70, 72; 80, 82) further comprises:
mounting a first bracket (110) to one of the first and second mould shell sections (70, 80);
mounting a second bracket (112) to the other of the first and second mould shell sections (72, 82); and
coupling an adjustable connector (118) to each of the first and second brackets (110, 112), wherein the adjustable connector (118) includes at least one adjustment actuator, **characterized in that** mounting the first and second brackets (110, 112) further comprises:
providing a pair of L-shaped brackets (110, 112), each having a first leg (114) and a second leg (116) extending therefrom;
coupling the first leg (114) of one bracket (110) to one of the first and second mould shell sections (70, 80);
coupling the first leg (114) of the other bracket (112) to the other of the first and second mould shell sections (70, 72; 80, 82); and
orienting the second leg (116) of each bracket (110, 112) in the same direction such that the second legs (116) overlap with each other in a longitudinal direction (L) of the mould half (42, 44),
wherein the adjustable connector (118) extends between the second legs (116) of the pair of brackets (110, 112).

2. Method according to according to claim 1, wherein the first leg (114) of the one bracket (110) is coupled to one of the first and second flanges (106) and the first leg (114) of the other bracket (112) is coupled to the other of the first and second flanges (108).

3. The method according to any of claims 1 to 2, further comprising arranging the first bracket (110), second bracket (112), and adjustable connector (118) such that an adjustment path of said adjustable connector (118) is oriented in a substantially vertical direction of the mould half (42, 44), and relative movement between the first and second mould shell sections (70, 72; 80, 82) is in the substantially thickness-wise direction (H).

4. The method according to any previous claim, wherein adjusting the relative positions of the first and second mould shell sections (70, 72; 80, 82) comprises moving said adjustment actuator (118) to provide movement of the first and second mould shell sections (70, 72; 80, 82) relative to each other.

5. The method according to any preceding claim, wherein said adjustable connector (118) includes a connecting rod having at least one adjustment actuator (120) in the form of a rotatable member.

6. The method according to claim 5, wherein coupling the connecting rod to the first and second brackets (110, 112) further comprises:
inserting a shaft through an opening in the first bracket (110);
disposing the first bracket (100) between a first pair of rotatable members on the shaft;
inserting the shaft through an opening in the second bracket (112); and
disposing the second bracket (112) between a second pair of rotatable members on the shaft.

7. The method according to according to any preceding claim, further including; providing a plurality of holes (130) in one of the first and second mould shell sections (70, 80) adjacent the interface (74, 84);
using the plurality of holes (130) in the one of the first and second mould shell sections (70, 80) as a guide for forming a corresponding plurality of holes (132) in the other of the first and second mould shell sections (72, 82), such that the plurality of holes (130) and the corresponding plurality of holes (132) are in substantial alignment with each other; and
engaging a fastener (136) with each of the substantially aligned holes (130) and corresponding holes (132) in the first and second mould shell sections (70, 72; 80, 82).

8. The method according to claim 7, wherein the plurality of holes (130) are in one of the first and second flanges (106) and the corresponding plurality of holes (132) are formed in the other of the first and second flanges (108).

9. A method of manufacturing a wind turbine blade, comprising:
providing a first mould half (42) assembled according to the method of any of claims 1-8; and
placing fibre and a resin in the mould shell (46) of the first mould half (42) to form a first shell half (30) of the wind turbine blade (20).

10. The method according to claim 9, further comprising:
providing a second mould half (44); and
placing fibre and a resin in a mould shell of the second mould half (44) to form a second shell half (32) of the wind turbine blade (20).

11. The method according to claim 10, wherein the first and second mould halves (42, 44) are movably coupled together, the method further comprising:
moving the first and second mould halves (42, 44) relative to each other such that one mould half (42, 44) is on the other mould half (42, 44) and the first and second shell halves (30, 32) of the wind turbine blade (20) confront each other; and
coupling the first and second shell halves (30, 32) together to form the wind turbine blade (20).

12. A mould half (42, 44) for forming a wind turbine blade, comprising:
a mould shell (50, 54) defining a mould surface (46, 48), the mould shell (50, 54) including at least a first mould shell section (58, 64) and a second mould shell section (60, 66), each of the first and second mould shell sections (70, 72; 80, 82) having a connecting end (102, 104) which confront each other along an interface (74, 84);
at least one adjustment device (100) positioned adjacent the interface (74, 84) and coupled to both the first and second mould shell sections (70, 72; 80, 82), the at least one adjustment device (100) configured move the first and second mould shell sections(70, 72; 80, 82) relative to each other, wherein the at least one adjustment device (100) comprises:
a first bracket (110) coupled to one of the first and second mould shell sections (70, 72; 80, 82);
a second bracket (112) coupled to the other of the first and second mould shell sections (70, 72; 80, 82); and
an adjustment connector (118) coupled to each of the first and second brackets (110, 112) and including at least one adjustment actuator (120), wherein operation of the at least one adjustment actuator (120) provides relative movement between the first and second mould shell sections (70, 72; 80, 82),
wherein the first bracket (110), second bracket (112), and adjustment connector (118) are arranged such that the adjustment connector (118) is positioned only on one side of the interface (74, 84), **characterized in that** the first and second brackets (110, 112) further comprise:
a pair of L-shaped brackets (110, 112), each having a first leg (114) and a second leg (116) extending therefrom;
wherein the first leg (114) of one bracket (110) is coupled to one of the first and second mould shell sections (70, 72);
wherein the first leg (114) of the other bracket (112) is coupled to the other of the first and second mould shell sections (80, 82); and
wherein the second leg (116) of each bracket (100) is oriented in the same direction such that the second legs (116) overlap with each other in a longitudinal direction of the mould half (42, 44),
wherein the adjustable connector (118) extends between the second legs (116) of the pair of brackets (110, 112).

13. The mould half (42, 44) according to claim 12, wherein the first bracket (110), second bracket (112), and adjustment connector (118) are arranged such that an adjustment path of said adjustment actuator (120) is oriented in a substantially thickness-wise direction (H).

14. The mould half (42, 44) according to claim 12 or 13, wherein at least one of the brackets (110, 112) extends across the interface (74, 84) to define an overlap region between the first and second brackets (110, 112), the adjustment connector (118) being coupled to the first and second brackets (110, 112) in the overlap region.

## Patentansprüche

1. Verfahren zum Anordnen einer Form zum Bilden eines Windkraftanlagenblatts, umfassend:
Bereitstellen einer Formhälfte (42, 44), die eine Formschale (50, 54) aufweist, die eine Formoberfläche (46, 48) definiert, wobei die Formschale (50, 54) mindestens einen ersten Formschalenabschnitt (70, 80) und einen zweiten Formschalenabschnitt (72, 82) aufweist;
Positionieren des mindestens ersten Formschalenabschnitts (70, 80) und des mindestens zweiten Formschalenabschnitts (72, 82) angrenzend aneinander, sodass Verbindungsenden (102, 104) sowohl des ersten als auch zweiten Formschalenabschnitts (70, 72; 80, 82) einander entlang einer Grenzfläche (74, 84) gegenüberstehen;
wobei der erste Formschalenabschnitt (70, 80) einen ersten Flansch (106) angrenzend an das Verbindungsende (102) und sich von der Formoberfläche (46) des ersten Formschalenabschnitts (70, 80) weg erstreckend beinhaltet und wobei der zweite Formschalenabschnitt (72, 82) einen zweiten Flansch (108) angrenzend an das Verbindungsende (104) und sich von der Formoberfläche (48) des zweiten Formschalenabschnitts (72, 82) weg erstreckend beinhaltet;
Anpassen der relativen Positionen des ersten und zweiten Formschalenabschnitts (70, 72; 80, 82), sodass die Formoberfläche über die Grenzfläche (74, 84) im Wesentlichen bündig ist; und
mit der Formoberfläche über die Grenzfläche (74, 84) im Wesentlichen bündig, Befestigen der relativen Positionen des ersten und zweiten Formschalenabschnitts (70, 72; 80, 82), um einen sanften Übergang über die Grenzfläche (74, 84) beizubehalten, wobei der Anpassungsschritt weiter umfasst:
Montieren mindestens einer Anpassungsvorrichtung (100) an dem ersten und zweiten Formschalenabschnitt (70, 72; 80, 82), angrenzend an die Grenzfläche (74, 84), wobei die mindestens eine Anpassungsvorrichtung (100) konfiguriert ist, die relativen Positionen des ersten und zweiten Formschalenabschnitts (70, 72; 80, 82) anzupassen, wobei die mindestens eine Anpassungsvorrichtung (100) an den ersten und zweiten Formschalenabschnitt (70, 72; 80, 82) zu montieren weiter umfasst:
Montieren einer ersten Halterung (110) an einem des ersten und zweiten Formschalenabschnitts (70, 80);
Montieren einer zweiten Halterung (112) an dem anderen des ersten und zweiten Formschalenabschnitts (72, 82); und
Koppeln eines anpassbaren Verbindungsstücks (118) mit sowohl der ersten als auch zweiten Halterung (110, 112), wobei das anpassbare Verbindungsstück (118) mindestens ein Anpassungsstellglied beinhaltet, **dadurch gekennzeichnet, dass** Montieren der ersten und zweiten Halterung (110, 112) weiter umfasst:
Bereitstellen eines Paares L-förmiger Halterungen (110, 112), wobei beide einen ersten Schenkel (114) und einen zweiten Schenkel (116) aufweisen, die sich davon erstrecken;
Koppeln des ersten Schenkels (114) einer Halterung (110) mit einem des ersten und zweiten Formschalenabschnitts (70, 80);
Koppeln des ersten Schenkels (114) der anderen Halterung (112) mit dem anderen des ersten und zweiten Formschalenabschnitts (70, 72; 80, 82); und
Ausrichten des zweiten Schenkels (116) jeder Halterung (110, 112) in derselben Richtung, sodass die zweiten Schenkel (116) miteinander in einer Längsrichtung (L) der Formhälfte (42, 44) überlappen,
wobei sich das anpassbare Verbindungsstück (118) zwischen den zweiten Schenkeln (116) des Paares von Halterungen (110, 112) erstreckt.

2. Verfahren nach Anspruch 1, wobei der erste Schenkel (114) der einen Halterung (110) mit einem des ersten und zweiten Flansches (106) gekoppelt ist und der erste Schenkel (114) der anderen Halterung (112) mit dem anderen des ersten und zweiten Flansches (108) gekoppelt ist.

3. Verfahren nach einem der Ansprüche 1 bis 2, weiter umfassend Anordnen der ersten Halterung (110), zweiten Halterung (112) und des anpassbaren Verbindungsstücks (118) so, dass ein Anpassungspfad des anpassbaren Verbindungsstücks (118) in einer im Wesentlichen vertikalen Richtung der Formhälfte (42, 44) ausgerichtet ist und relative Bewegung zwischen dem ersten und zweiten Formschalenabschnitt (70, 72; 80, 82) im Wesentlichen in der Dickenrichtung (H) ist.

4. Verfahren nach einem vorstehenden Anspruch, wobei Anpassen der relativen Positionen des ersten und zweiten Formschalenabschnitts (70, 72; 80, 82) umfasst, das Anpassungsstellglied (118) zu bewegen, um Bewegung des ersten und zweiten Formschalenabschnitts (70, 72; 80, 82) relativ zueinander bereitzustellen.

5. Verfahren nach einem vorstehenden Anspruch, wobei das anpassbare Verbindungsstück (118) eine Verbindungsstange beinhaltet, die mindestens ein Anpassungsstellglied (120) in der Form eines drehbaren Elements aufweist.

6. Verfahren nach Anspruch 5, wobei Koppeln der Verbindungsstange mit der ersten und zweiten Halterung (110, 112) weiter umfasst:
Einsetzen einer Welle durch eine Öffnung in der ersten Halterung (110);
Anordnen der ersten Halterung (100) zwischen einem ersten Paar drehbarer Elemente an der Welle;
Einsetzen der Welle durch eine Öffnung in der zweiten Halterung (112); und
Anordnen der zweiten Halterung (112) zwischen einem zweiten Paar drehbarer Elemente an der Welle.

7. Verfahren nach einem vorstehenden Anspruch, weiter beinhaltend; Bereitstellen einer Vielzahl von Löchern (130) in einem des ersten und zweiten Formschalenabschnitts (70, 80), angrenzend an die Grenzfläche (74, 84);
Verwenden der Vielzahl von Löchern (130) in dem einen des ersten und zweiten Formschalenabschnitts (70, 80) als eine Führung zum Bilden einer entsprechenden Vielzahl von Löchern (132) in dem anderen des ersten und zweiten Formschalenabschnitts (72, 82), sodass die Vielzahl von Löchern (130) und die entsprechende Vielzahl von Löchern (132) im Wesentlichen in Ausrichtung miteinander sind; und
Eingreifen eines Befestigungsmittels (136) mit jedem der im Wesentlichen ausgerichteten Löcher (130) und entsprechenden Löcher (132) in dem ersten und zweiten Formschalenabschnitt (70, 72; 80, 82).

8. Verfahren nach Anspruch 7, wobei die Vielzahl von Löchern (130) in einem des ersten und zweiten Flansches (106) ist und die entsprechende Vielzahl von Löchern (132) in dem anderen des ersten und zweiten Flansches (108) gebildet ist.

9. Verfahren zur Herstellung eines Windkraftanlagenblatts, umfassend:
Bereitstellen einer ersten Formhälfte (42), die gemäß dem Verfahren nach einem der Ansprüche 1-8 aufgebaut ist; und
Platzieren von Fasern und einem Harz in der Formschale (46) der ersten Formhälfte (42), um eine erste Schalenhälfte (30) des Windkraftanlagenblatts (20) zu bilden.

10. Verfahren nach Anspruch 9, weiter umfassend:
Bereitstellen einer zweiten Formhälfte (44); und
Platzieren von Fasern und einem Harz in einer Formschale der zweiten Formhälfte (44), um eine zweite Schalenhälfte (32) des Windkraftanlagenblatts (20) zu bilden.

11. Verfahren nach Anspruch 10, wobei die erste und zweite Formhälfte (42, 44) beweglich miteinander gekoppelt sind, wobei das Verfahren weiter umfasst:
Bewegen der ersten und zweiten Formhälfte (42, 44) relativ zueinander, sodass eine Formhälfte (42, 44) an der anderen Formhälfte (42, 44) ist und die erste und zweite Schalenhälfte (30, 32) des Windkraftanlagenblatts (20) einander gegenüberstehen; und
Koppeln der ersten und zweiten Schalenhälfte (30, 32) miteinander, um das Windkraftanlagenblatt (20) zu bilden.

12. Formhälfte (42, 44) zum Bilden eines Windkraftanlagenblatts, umfassend:
eine Formschale (50, 54), die eine Formoberfläche (46, 48) definiert, wobei die Formschale (50, 54) mindestens einen ersten Formschalenabschnitt (58, 64) und einen zweiten Formschalenabschnitt (60, 66) beinhaltet, wobei sowohl der erste als auch zweite Formschalenabschnitt (70, 72; 80, 82) ein Verbindungsende (102, 104) aufweisen, die einander entlang einer Grenzfläche (74, 84) gegenüberstehen;
mindestens eine Anpassungsvorrichtung (100), die angrenzend an die Grenzfläche (74, 84) positioniert ist und sowohl mit dem ersten als auch zweiten Formschalenabschnitt (70, 72; 80, 82) gekoppelt ist, wobei die mindestens eine Anpassungsvorrichtung (100) konfiguriert ist, den ersten und zweiten Formschalenabschnitt (70, 72; 80, 82) relativ zueinander zu bewegen, wobei die mindestens eine Anpassungsvorrichtung (100) umfasst:
eine erste Halterung (110), die mit einem des ersten und zweiten Formschalenabschnitts (70, 72; 80, 82) gekoppelt ist;
eine zweite Halterung (112), die mit dem anderen des ersten und zweiten Formschalenabschnitts (70, 72; 80, 82) gekoppelt ist; und
ein Anpassungsverbindungsstück (118), das sowohl mit der ersten als auch zweiten Halterung (110, 112) gekoppelt ist und mindestens ein Anpassungsstellglied (120) beinhaltet, wobei Betrieb des mindestens einen Anpassungsstellglieds (120) relative Bewegung zwischen dem ersten und zweiten Formschalenabschnitt (70, 72; 80, 82) bereitstellt,
wobei die erste Halterung (110), zweite Halterung (112) und das Anpassungsverbindungsstück (118) so angeordnet sind, dass das Anpassungsverbindungsstück (118) nur an einer Seite der Grenzfläche (74, 84) positioniert ist, **dadurch gekennzeichnet, dass** die erste und zweite Halterung (110, 112) weiter umfassen:
ein Paar L-förmiger Halterungen (110, 112), wobei jede einen ersten Schenkel (114) und einen zweiten Schenkel (116) aufweist, die sich davon erstrecken;
wobei der erste Schenkel (114) einer Halterung (110) mit einem des ersten und zweiten Formschalenabschnitts (70, 72) gekoppelt ist;
wobei der erste Schenkel (114) der anderen Halterung (112) mit dem anderen des ersten und zweiten Formschalenabschnitts (80, 82) gekoppelt ist; und
wobei der zweite Schenkel (116) jeder Halterung (100) in derselben Richtung ausgerichtet ist, sodass die zweiten Schenkel (116) miteinander in einer Längsrichtung der Formhälfte (42, 44) überlappen,
wobei sich das anpassbare Verbindungsstück (118) zwischen den zweiten Schenkeln (116) des Paares von Halterungen (110, 112) erstreckt.

13. Formhälfte (42, 44) nach Anspruch 12, wobei die erste Halterung (110), zweite Halterung (112) und das Anpassungsverbindungsstück (118) so angeordnet sind, dass ein Anpassungspfad des Anpassungsstellglieds (120) im Wesentlichen in einer Dickenrichtung (H) ausgerichtet ist.

14. Formhälfte (42, 44) nach Anspruch 12 oder 13, wobei sich mindestens eine der Halterungen (110, 112) über die Grenzfläche (74, 84) erstreckt, um einen Überlappungsbereich zwischen der ersten und zweiten Halterung (110, 112) zu definieren, wobei das Anpassungsverbindungsstück (118) mit der ersten und zweiten Halterung (110, 112) in dem Überlappungsbereich gekoppelt ist.

## Revendications

1. Procédé d'assemblage d'un moule pour former une pale d'éolienne, comprenant :
la fourniture d'une moitié de moule (42, 44) présentant une coque de moule (50, 54) définissant une surface de moule (46, 48), la coque de moule (50, 54) présentant au moins d'une première section de coque de moule (70, 80) et une seconde section de coque de moule (72, 82) ;
le positionnement de la au moins première section de coque de moule (70, 80) et de la au moins seconde section de coque de moule (72, 82) adjacentes l'une à l'autre de telle sorte que des extrémités de connexion (102, 104) de chacune des première et seconde sections de coque de moule (70, 72 ; 80, 82) se font face le long d'une interface (74, 84) ;
dans lequel la première section de coque de moule (70, 80) inclut une première bride (106) adjacente à l'extrémité de connexion (102) et s'étendant à l'écart de la surface de moule (46) de la première section de coque de moule (70, 80), et dans lequel la seconde section de coque de moule (72, 82) inclut une seconde bride (108) adjacente à l'extrémité de connexion (104) et s'étendant à l'écart de la surface de moule (48) de la seconde section de coque de moule (72, 82) ;
l'ajustement des positions relatives des première et seconde sections de coque de moule (70, 72 ; 80, 82) de sorte que la surface de moule à travers l'interface (74, 84) soit sensiblement affleurante ; et
avec la surface de moule à travers l'interface (74, 84) sensiblement affleurante, la fixation des positions relatives des première et seconde sections de coque de moule (70, 72 ; 80, 82) afin de maintenir une transition douce à travers l'interface (74, 84), dans lequel l'étape d'ajustement comprend en outre :
le montage d'au moins un dispositif de coque de moule d'ajustement (100) sur les première et seconde sections de coque de moule (70, 72 ; 80, 82) adjacentes à l'interface (74, 84), le au moins un dispositif d'ajustement (100) étant configuré pour ajuster les positions relatives des première et seconde sections de coque de moule (70, 72 ; 80, 82), dans lequel le montage du au moins un dispositif d'ajustement (100) sur les première et seconde sections de coque de moule (70, 72 ; 80, 82) comprend en outre :
le montage d'un premier support (110) sur l'une des première et seconde sections de coque de moule (70, 80) ;
le montage d'un second support (112) sur l'autre des première et seconde sections de coque de moule (72 ; 82) ; et
le couplage d'un connecteur ajustable (118) à chacun des premier et second supports (110, 112), dans lequel le connecteur ajustable (118) inclut au moins un actionneur d'ajustement, **caractérisé en ce que**
le montage des premier et second supports (110, 112) comprend en outre :
la fourniture d'une paire de supports en forme de L (110, 112), chacun présentant une première jambe (114) et une seconde jambe (116) s'étendant à partir de celui-ci ;
le couplage de la première jambe (114) d'un support (110) à l'une des première et seconde sections de coque de moule (70 ; 80) ;
le couplage de la première jambe (114) de l'autre support (112) à l'autre des première et seconde sections de coque de moule (70, 72 ; 80, 82) ; et
l'orientation de la seconde jambe (116) de chaque support (110, 112) dans la même direction de sorte que les secondes jambes (116) se chevauchent dans une direction longitudinale (L) de la moitié de moule (42, 44),
dans lequel le connecteur ajustable (118) s'étend entre les seconds pieds (116) de la paire de supports (110, 112).

2. Procédé selon la revendication 1, dans lequel la première jambe (114) du premier support (110) est couplée à l'une des première et seconde brides (106) et la première jambe (114) de l'autre support (112) est couplée à l'autre des première et seconde brides (108).

3. Procédé selon l'une quelconque des revendications 1 à 2, comprenant en outre l'agencement du premier support (110), du second support (112), et du connecteur ajustable (118) de telle sorte qu'un trajet d'ajustement dudit connecteur ajustable (118) soit orienté dans une direction sensiblement verticale de la moitié de moule (42, 44), et qu'un déplacement relatif entre les première et seconde sections de coque de moule (70, 72 ; 80, 82) soit dans la direction (H) sensiblement dans le sens de l'épaisseur.

4. Procédé selon l'une quelconque des revendications précédentes, dans lequel l'ajustement des positions relatives des première et seconde sections de coque de moule (70, 72 ; 80, 82) comprend un déplacement dudit actionneur d'ajustement (118) pour fournir un déplacement des première et seconde sections de coque de moule (70, 72 ; 80, 82) les unes par rapport aux autres.

5. Procédé selon l'une quelconque des revendications précédentes, dans lequel ledit connecteur ajustable (118) inclut une tige de connexion présentant au moins un actionneur d'ajustement (120) sous la forme d'un élément rotatif.

6. Procédé selon la revendication 5, dans lequel le couplage de la tige de connexion aux premier et second supports (110, 112) comprend en outre :
l'insertion d'un arbre à travers une ouverture dans le premier support (110) ;
la disposition du premier support (100) entre une première paire d'éléments rotatifs sur l'arbre ;
l'insertion de l'arbre à travers une ouverture dans le second support (112) ; et
la disposition du second support (112) entre une seconde paire d'éléments rotatifs sur l'arbre.

7. Procédé selon l'une quelconque des revendications précédentes, incluant en outre ; la fourniture d'une pluralité de trous (130) dans une certaine des première et seconde sections de coque de moule (70, 80) adjacentes à l'interface (74, 84) ;
l'utilisation de la pluralité de trous (130) la certaine des première et seconde sections de coque de moule (70, 80) comme guide pour former une pluralité correspondante de trous (132) dans l'autre des première et seconde sections (72, 82) de coque de moule, de telle sorte que la pluralité de trous (130) et la pluralité correspondante de trous (132) soient sensiblement alignées l'une avec l'autre ; et
la mise en prise d'une fixation (136) avec chacun des trous (130) et des trous correspondants (132) sensiblement alignés dans les première et seconde sections de coque de moule (70, 72 ; 80, 82).

8. Procédé selon la revendication 7, dans lequel la pluralité de trous (130) sont dans une des première et seconde brides (106) et la pluralité correspondante de trous (132) sont formés dans l'autre des première et seconde brides (108).

9. Procédé de fabrication d'une pale d'éolienne, comprenant :
la fourniture d'une première moitié de moule (42) assemblée selon le procédé de l'une quelconque des revendications 1 à 8 ; et
le placement d'une fibre et une résine dans la coque de moule (46) de la première moitié de moule (42) pour former une première moitié de coque (30) de la pale d'éolienne (20).

10. Procédé selon la revendication 9, comprenant en outre :
la fourniture d'une seconde moitié de moule (44) ; et
le placement d'une fibre et une résine dans une coque de moule de la seconde moitié de moule (44) pour former une seconde moitié de coque (32) de la pale d'éolienne (20).

11. Procédé selon la revendication 10, dans lequel les première et seconde moitiés de moule (42, 44) sont couplées de manière mobile ensemble, le procédé comprenant en outre :
le déplacement des première et seconde moitiés de moule (42, 44) l'une par rapport à l'autre de telle sorte qu'une moitié de moule (42, 44) se trouve sur l'autre moitié de moule (42, 44) et que les première et seconde moitiés de coque (30, 32) des pales d'éolienne (20) se font face ; et
le couplage des première et seconde moitiés de coque (30, 32) ensemble pour former la pale d'éolienne (20).

12. Moitié de moule (42, 44) pour former une pale d'éolienne, comprenant :
une coque de moule (50, 54) définissant une surface de moule (46, 48), la coque de moule (50, 54) incluant au moins une première section de coque de moule (58, 64) et une seconde section de coque de moule (60, 66), chacune des première et seconde sections de coque de moule (70, 72 ; 80, 82) présentant une extrémité de connexion (102, 104) qui se font face le long d'une interface (74, 84) ;
au moins un dispositif d'ajustement (100) positionné adjacent à l'interface (74, 84) et couplé à la fois aux première et seconde sections de coque de moule (70, 72 ; 80, 82), le au moins un dispositif d'ajustement (100) étant configuré pour déplacer les première et seconde sections de coque de moule (70, 72 ; 80, 82) l'une par rapport à l'autre, dans laquelle le au moins un dispositif d'ajustement (100) comprend :
un premier support (110) couplé à l'une des première et seconde sections de coque de moule (70, 72 ; 80, 82) ;
un second support (112) couplé à l'autre des première et seconde sections de coque de moule (70, 72 ; 80, 82) ; et
un connecteur d'ajustement (118) couplé à chacun des premier et second supports (110, 112) et incluant au moins un actionneur d'ajustement (120), dans laquelle un fonctionnement du au moins un actionneur d'ajustement (120) fournit un déplacement relatif entre les première et seconde sections de coque de moule (70, 72 ; 80, 82),
dans laquelle le premier support (110), le second support (112), et le connecteur d'ajustement (118) sont agencés de telle sorte que le connecteur d'ajustement (118) est positionné uniquement sur un côté de l'interface (74, 84), **caractérisée en ce que**
les premier et second supports (110, 112) comprennent en outre :
une paire de supports en forme de L (110, 112), chacun présentant une première jambe (114) et une seconde jambe (116) s'étendant à partir de celui-ci ;
dans laquelle la première jambe (114) d'un support (110) est couplée à l'une des première et seconde sections de coque de moule (70, 72) ;
dans laquelle la première jambe (114) de l'autre support (112) est couplée à l'autre des première et seconde sections de coque de moule (80, 82) ; et
dans laquelle la seconde jambe (116) de chaque support (100) est orientée dans la même direction de telle sorte que les secondes jambes (116) se chevauchent dans une direction longitudinale de la moitié de moule (42, 44),
dans laquelle le connecteur ajustable (118) s'étend entre les secondes jambes (116) de la paire de supports (110, 112).

13. Moitié de moule (42, 44) selon la revendication 12, dans laquelle le premier support (110), le second support (112), et le connecteur d'ajustement (118) sont agencés de telle sorte qu'un trajet d'ajustement dudit actionneur d'ajustement (120) soit orienté dans une direction (H) sensiblement dans le sens de l'épaisseur.

14. Moitié de moule (42, 44) selon la revendication 12 ou 13, dans lequel au moins un des supports (110, 112) s'étend à travers l'interface (74, 84) pour définir une région de chevauchement entre les premier et second supports (110, 112), le connecteur d'ajustement (118) étant couplé aux premier et second supports (110, 112) dans la région de chevauchement.
